# EUROPEAN PATENT APPLICATION

(11) **EP 0 816 802 A2**
(43) Date of publication of application: **07.01.1998**
(21) Application number: 96119815.7
(22) Date of filing: 10.12.1996
(51) Int. Cl.: G01C 21/20

(54) **Navigation system**

(30) Priority: 27.06.1996 JP 167795/96
(71) Applicant: MITSUBISHI DENKI KABUSHIKI KAISHA, Tokyo 100 (JP)
(72) Inventor: Sakamoto, Tadashi, Chiyoda-ku, Tokyo 100 (JP); Takita, Hiroki, Chiyoda-ku, Tokyo 100 (JP)
(74) Representative: Tiedtke, Harro, Dipl.-Ing.

(57) **Abstract**

A navigation-information transmitting system has a map/road-information data base, an additional-information data base, a local-information data base, a program data base and a wide-area-information data base. The navigation-information transmitting system supplies information and programs stored in the data bases to a navigation apparatus.

## Description

### BACKGROUND OF THE INVENTION

### Field of the Invention

The present invention relates to a navigation system that can provide passengers of a vehicle with additional information for the sake of passenger convenience besides road information and optimum guidance routes while the vehicle is running.

### Description of the Prior Art

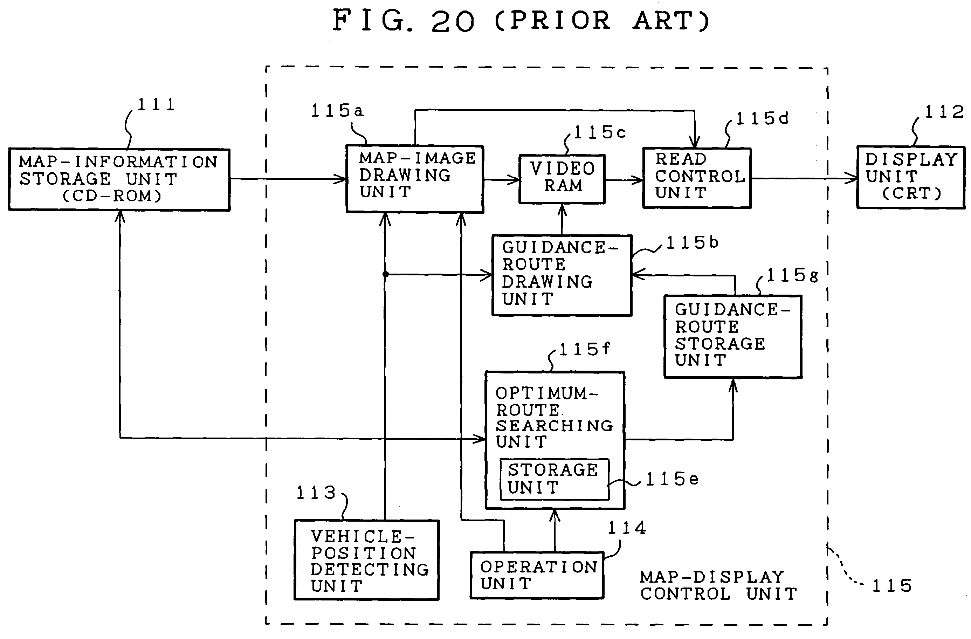

Fig. 20 is a block diagram showing the configuration of a conventional navigation apparatus disclosed in documents such as JP-A 5/240652. Reference numeral 111 shown in the figure is a map-information storage unit such as a CD-ROM for storing map information and reference numeral 112 denotes a display unit such as a CRT for displaying information including an optimum guidance route. Reference numeral 113 is a vehicle-position detecting unit for calculating the present position of the vehicle from information received from a GPS. Reference numeral 114 denotes an operation unit including a variety of keys and reference numeral 115 is a map-display control unit for generating a video image of a map in the neighborhood of the vehicle's present position and for generating a video image of the optimum guidance route. The map-display control unit 115 comprises: a map-image drawing unit 115a for generating a video image of a map from map data; a guidance-route drawing unit 115b for generating a video image of an optimum guidance route from guidance-route data from a departure point to a destination point resulting from an optimum-route searching process; a video RAM 115c for storing video images of maps and optimum guidance routes; a read control unit 115d for reading out one screen of video image from the video RAM 115c; an optimum-route searching unit 115f including a storage unit 115e for computing an optimum guidance route from information included in the map data; and a guidance-route storage unit 115g for storing an array of nodes composing an optimum guidance route as guidance-route data.

Next, the operation of the conventional navigation apparatus is explained.

The navigation apparatus shown in Fig. 20 is mounted in a vehicle and used. The map-image drawing unit 115a reads out map data of an area wider than an image display area of the neighborhood of the vehicle's present position, for example, an area for 9 screens from the map-information storage unit 111 in accordance with information on the position of the vehicle received from the vehicle-position identifying unit 113. In the case of a CD-ROM used as the map-information storage unit 111, the map data is read out through a CD-ROM driver. Then, a dot-image map picture is generated and stored in the video RAM 115c. As a departure point, a destination point and a request for an operation to search for an optimum guidance route are entered via the operation unit 114, the optimum-route searching unit 115f computes an optimum guidance route from the departure point to the destination point by using, among other techniques, Dijkstra's method. Information on an array of nodes composing the calculated optimum guidance route is stored in the guidance-route storage unit 115g as guidance-route data. The guidance-route drawing unit 115b then generates a video image of the optimum guidance route from the information on the array of nodes composing the optimum guidance route. The video image is then stored in the video RAM 115c. One screen of video image read out by the read control unit 115d from the video RAM 115c is then output to the display unit 112. The display unit 112 displays the inputted video image.

The map-image drawing unit 115a updates the contents of the video RAM 115c in accordance with the running of the vehicle as occasion calls so that an area displayed on the display unit 112 is within an area of video image stored in the video RAM 115c. In addition, the guidance-route drawing unit 115b updates the video image of the optimum guidance route in accordance with running of the vehicle and stores the updated video image in the video RAM 115c from time to time. In the case of this navigation apparatus, information on the optimum guidance route is visually displayed. It should be noted, however, that an optimum guidance route may be output by means of an audio signal in some navigation apparatuses.

The user of the navigation apparatus purchases a medium such as a CD-ROM for storing map data before using the navigation apparatus. When the vehicle is running in a region outside an area covered by the map data stored in the purchased medium, the user must purchase another medium in which map data that covers the region is stored. In addition, there are various kinds of formats in which map data is stored in a medium. For this reason, the user has to purchase a medium with a format that can be read by a medium reading unit employed in the navigation apparatus owned by the user.

In addition, when a medium is revised, the format may be modified in order to increase the amount of information stored therein. In this case, when the user wants to use newly added information, it is necessary for the user either to purchase the revised medium or a new navigation apparatus that keeps up with the revised medium. Even if the format remains unchanged, the user needs to purchase a new medium if the information stored in the present medium becomes obsolete. The information stored in the medium becomes obsolete if, for example, information on one-way roads, on locations of gas stations or telephone numbers of specific places in the map is different from information stored in the medium.

It is also impossible to store dynamically changing information such as traffic jam information in a medium. Thus, with the navigation system shown in Fig. 20, dynamically changing information can not be obtained. In addition, the medium reading unit is generally expensive. As a result, a navigation apparatus that receives map information from a medium such as a CD-ROM can not help becoming expensive as well.

The conventional navigation apparatus shown in Fig. 20 has problems described above.

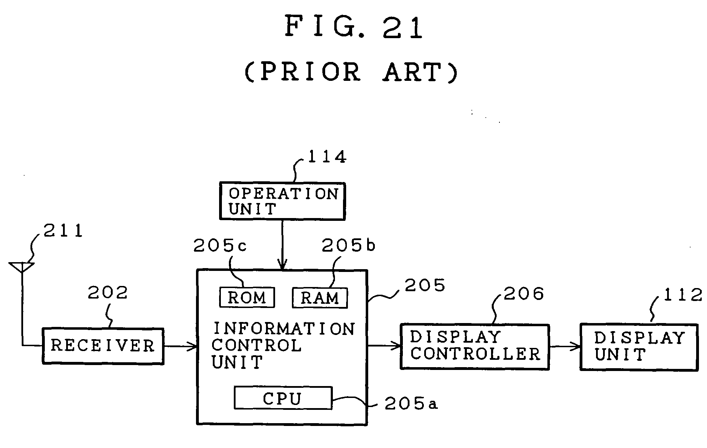

There is also a navigation apparatus that receives map information and traffic information by communication so that the problems described above are solved thereby. Fig. 21 is a block diagram showing the configuration of another conventional navigation apparatus disclosed in documents such as JP-A 6/242722. In the figure, reference numeral 211 denotes an antenna for receiving an FM broadcast wave and reference numeral 202 denotes a receiver for detecting the FM broadcast wave received by the antenna 211 and extracting map information and traffic information from the detected signal. Reference numeral 205 denotes an information control unit for generating a video image of a map from the map information and traffic information. Reference numeral 206 denotes a display controller for controlling an operation to display the video image of a map on a display unit 112. The information control unit 205 comprises a CPU 205a for executing various kinds of processing, a RAM 205b for storing map information received by the antenna 211 and the video image of a map generated therein and a ROM 205c for storing a program.

Next, the operation of the other conventional navigation apparatus shown in Fig. 21 is explained.

The receiver 202 extracts map information and traffic information multiplexed in an FM broadcast wave received by the antenna 211 and outputs the extracted map information and traffic information to the information control unit 205. The CPU 205a in the information control unit 205 creates a video image of a map from map data included in the map information and stores the video image of the map into the RAM 205b. The video image of the map stored in the RAM 205b is outputted to the display controller 206 which then displays the video image of the map on the display unit 112.

When the user enters a request for enlarging a map or a request for reducing a map via the operation unit 114, the CPU 205a produces an enlarged video image of the map or a reduced video image of the map from the map data and outputs the enlarged or reduced video image of the map to the display controller 206. The display controller 206, in turn, displays the enlarged or reduced video image of the map on the display unit 112. With this navigation apparatus, it is thus possible to display the video image of a map without using a medium such as a CD-ROM.

With this navigation apparatus, however, only the video image of a map created from map data received along with an FM broadcast wave can be displayed. In general, the FM broadcast wave carries map data for the neighborhood of an area in which the vehicle is running at the present time. Accordingly, the user can not take a look at a region outside an area in which the vehicle is running at the present time. As a result, it is difficult to search for an optimum guidance route with a destination point located in a region outside an area in which the vehicle is running at the present time. In addition, map information and traffic information are multiplexed in an FM broadcast wave in a predetermined format. Therefore, also in this case, the navigation apparatus can not obtain map information and traffic information if the navigation apparatus does not conform to the predetermined format. Further, dynamically changing information such as information of traffic jam on road is also not taken into consideration in this navigation apparatus.

In order to give passengers of a vehicle dynamically changing information, there is provided a navigation system such as a VICS system for broadcasting road information, traffic information such as traffic accidents, information on vehicle parking areas and other kinds of information collected from sensors installed at a places here and there such as express ways and national roads through an FM broadcast wave or a beacon. However, such a navigation system deals with only trunk roads in general. In other words, it is impossible to include temporarily traffic jam information due to, for example, gas-pipe or water-pipe construction work under way on a small road. Further, in the case of such a navigation system, information is transmitted in a one-way direction. Accordingly, the on-board navigation apparatus mounted on the vehicle must receive all broadcasted information and has to extract data related to a screen displayed at the present time and data related to an operation to search for an optimum guidance route and hold the extracted data. In order to extract only necessary data from a large amount of information and hold the extracted data, complex processing is indispensable. As a result, a navigation system implementing such complex processing is expensive.

As disclosed in JP-A 5/240652 and described in JP-A 7/209005 and JP-B 8/7527, the navigation apparatus requires a large amount of memory in order for the navigation apparatus to execute an operation to search for an optimum guidance route. As a result, the navigation apparatus can not help becoming expensive.

Disclosed in JP-A 62/224898 is a route guidance system that allows map information to be transmitted from a computer installed at locations here and there on a road to an on-board navigation apparatus mounted on a vehicle. However, map information handled by such a route guidance system is information for guidance routes only and, thus, the navigation apparatus can not obtain information on arbitrary maps. With a system disclosed in JP-A 63/94400, information can be transmitted from an earth station to an on-board navigation apparatus mounted on a vehicle at a request made by the navigation apparatus.

The conventional navigation systems with configurations described above have the following problems:
(1) The navigation apparatus, in which map information is obtained from a medium such as a CD-ROM, can not deal with a medium with an incompatible format. In some cases, the user has to purchase a new medium or a new navigation apparatus. Further, the navigation apparatus can not deal with dynamically changing information.
(2) The navigation apparatus in which map information is obtained through communication can not deal with a map outside a region where the vehicle is running at the present time. Further, the navigation system can not obtain map information and traffic information if the navigation system does not conform to the format in which information is broadcasted.
(3) The navigation apparatus, in which road information and traffic information are obtained over a wide range through communication, can not obtain detailed local information. In addition, a configuration that can deal with necessary information is expensive. Here, by the term local, the concept of both a narrow area including only small streets other than trunk roads and a narrow area including trunk roads and small streets is meant.
(4) A configuration that allows an operation to search for an optimum guidance route is expensive.

### SUMMARY OF THE INVENTION

The present invention addresses the problems described above. It is thus an object of the present invention to provide a navigation system that can provide passengers of a vehicle with additional information for the sake of passenger convenience besides information including local information on roads and optimum guidance routes while the vehicle is running by using a navigation apparatus with a simple configuration.

In a navigation system provided by the present invention, a navigation-information transmitting system comprises:
a program data base for storing programs;
a map/road-information data base for storing information such as map information and road information; and
a supply means for supplying a program stored in the program data base or traffic information, or a program stored in the program data base and traffic information to the navigation apparatus at a request made by the navigation apparatus.

With such a scheme, the navigation apparatus can use a most recent program and, at the same time, the configuration of the navigation apparatus can be made simple.

As an alternative, the supply means can also have a configuration which can supply map information stored in the map/road-information data base and a map drawing program stored in the program data base to a navigation apparatus. With such a configuration, the navigation apparatus can draw a video image by using the newest map drawing program and the most recent map information.

As another alternative, the supply means can have a configuration which is capable of retrieving road information in an area where a vehicle passes through for an object of the operation to search for an optimum guidance route carried out by the navigation apparatus, from the map/road information data base, and supplying the retrieved information to the navigation apparatus. With such a configuration, the navigation apparatus can search an optimum guidance route based on the most recent road information.

The navigation-information transmitting system further has a wide-area-information data base for storing traffic information of a wide area. As a still another alternative, the supply system can have a configuration which is capable of supplying traffic jam information stored in the wide-area-information data base to the navigation apparatus. With such a configuration, the navigation apparatus can obtain various kinds of information from wide-area-information services indirectly without the need to subscribe the wide-area-information services.

As a still further alternative, the supply means can have a configuration which is capable of supplying a route searching program and a route-search-result displaying program stored in the program data base to the navigation apparatus. With such a configuration, the navigation apparatus can search for an optimum guidance route and display a result of the operation to search for an optimum guidance route by means of a newest route searching program and a newest route-search-result displaying program.

As a still further alternative, the navigation-information transmitting system can further have a configuration including a route searching means for searching for an optimum guidance route at a request issued by the navigation apparatus whereas the supply means can have a configuration which is capable of supplying a result of the search for an optimum guidance route to the navigation apparatus. With such configurations, the navigation apparatus can function without the need to carry out processing to search for an optimum guidance route. As a result, the price of the navigation apparatus can be made low.

As a still further alternative, the supply means can have a configuration which is capable of supplying a route-search-result displaying program stored in the program data base to the navigation apparatus. In this case, the configuration of the navigation apparatus can further be made simpler.

As a still further alternative, the navigation-information transmitting system can have a configuration including a conversion means for converting a result of an operation to search for an optimum guidance route into bit-map data. With such a configuration, the navigation apparatus can immediately display a result of an operation to search for an optimum guidance route received from the supply means.

As a still further alternative, the navigation-information transmitting system can further have a configuration including a local-information data base for storing local traffic jam information and the route searching means can have a configuration which is capable of searching for an optimum guidance route by using the local traffic jam information. In this case, the operation to search for an optimum guidance route can be carried out with an even higher degree of accuracy.

As a still further alternative, the navigation-information transmitting system can further have a configuration including an additional-information data base for storing additional information, that is, information other than traffic information, and the supply system can have a configuration which is capable of supplying additional information stored in the additional-information data base to the navigation apparatus. With such configurations, additional information such as information on parking areas at a detailed level can be provided to the user of the navigation apparatus.

As a still further alternative, the supply means can have a configuration which is capable of retrieving an information searching program for searching the additional information for information desired by the user and an information displaying program for displaying a result of an operation to search for an optimum guidance route from the program data base, and supplying the retrieved information searching program and the retrieved displaying program to the navigation apparatus. With such a configuration, the navigation apparatus can carry out an operation to search for an optimum guidance route by using the newest information searching program and display a result of the operation to search for an optimum guidance route by means of the newest displaying program.

As a still further alternative, the navigation system can have a configuration including a search means for extracting information desired by the user from the additional information stored in the additional-information data base and the supply means can have a configuration which is capable of supplying the information extracted by the search means to the navigation apparatus. With such configurations, the navigation apparatus can operate without the need to carry out search processing. As a result, the price of the navigation apparatus can be made low.

As a still further alternative, the supply means can have a configuration which is capable of supplying an information displaying program stored in the program data base to the navigation apparatus. With such a configuration, the navigation apparatus can use the newest displaying program.

As a still further alternative, the navigation-information transmitting system can have a conversion means for converting a result of an operation to search for an optimum guidance route carried out by the search means into bit-map data.

As a still further alternative, the additional-information data base can have a configuration which can be used for storing also communication addresses of facilities available in an additional map besides the additional information and the supply means can have a configuration which is capable of supplying a communication address along with additional information stored in the additional-information data base to the navigation apparatus. With such configurations, the user of the navigation can communicate with a facility such as an operator of a parking area, allowing the user to benefit more from the additional information.

### BRIEF DESCRIPTION OF THE DRAWINGS

Fig. 1 is a system-configuration diagram showing the configuration of a navigation system provided by a first embodiment of the present invention;
Fig. 2 is a flowchart showing the operation of the navigation system provided by the first embodiment of the present invention;
Fig. 3 is a flowchart showing the operation of the navigation system provided by a second embodiment of the present invention;
Fig. 4 is a flowchart showing the operation of the navigation system provided by a third embodiment of the present invention;
Fig. 5 is a flowchart showing the operation of the navigation system provided by a fourth embodiment of the present invention;
Fig. 6 is a flowchart showing the operation of the navigation system provided by a fifth embodiment of the present invention;
Fig. 7 is a flowchart showing the operation of the navigation system provided by a sixth embodiment of the present invention;
Fig. 8 is a flowchart showing the operation of the navigation system provided by a seventh embodiment of the present invention;
Fig. 9 is a flowchart showing the operation of the navigation system provided by an eighth embodiment of the present invention;
Fig. 10 is a flowchart showing the operation of the navigation system provided by a ninth embodiment of the present invention;
Fig. 11 is a flowchart showing the operation of the navigation system provided by a tenth embodiment of the present invention;
Fig. 12 is a flowchart showing the operation of the navigation system provided by an eleventh embodiment of the present invention;
Fig. 13 is a flowchart showing the operation of the navigation system provided by a twelfth embodiment of the present invention;
Fig. 14 is a flowchart showing the operation of the navigation system provided by a thirteenth embodiment of the present invention;
Fig. 15 is a flowchart showing the operation of the navigation system provided by a fourteenth embodiment of the present invention;
Fig. 16 is a flowchart showing the operation of the navigation system provided by a fifteenth embodiment of the present invention;
Fig. 17 is a flowchart showing the operation of the navigation system provided by a sixteenth embodiment of the present invention;
Fig. 18 is a system-configuration diagram showing the configuration of a navigation system provided by a seventeenth embodiment of the present invention;
Fig. 19 is a flowchart showing the operation of the navigation system provided by the seventeenth embodiment of the present invention;
Fig. 20 is a block diagram showing the configuration of a conventional navigation apparatus; and
Fig. 21 is a block diagram showing the configuration of another conventional navigation apparatus.

### DETAILED DESCRIPTION OF THE PREFERRED EMBODIMENTS

### Embodiment 1.

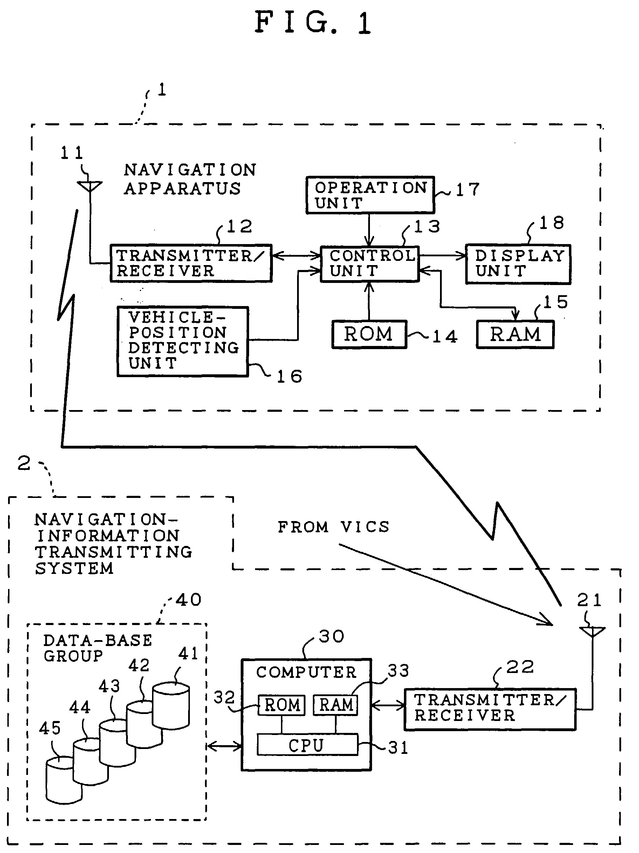

Fig. 1 is a system-configuration diagram showing the configuration of a navigation system provided by a first embodiment of the present invention. In the figure, reference numeral 1 denotes a navigation apparatus mounted on a vehicle and reference numeral 2 denotes a navigation-information transmitting system for providing various kinds of information to the navigation apparatus 1 responsive to requests from the navigation apparatus 1. The navigation apparatus 1 comprises: an antenna 11; a transmitter/receiver 12 for demodulating a signal received by the antenna 11 in order to extract data such as map information and for modulating a carrier signal with information to be transmitted and supplying the modulated signal to the antenna 11; a control unit 13 for outputting a request and information to the transmitter/receiver 12 and carrying out various kinds of processing based on information received from the transmitter/receiver 12; a ROM 14 for storing a program to be executed by the control unit 13; a RAM 15 for storing received program and received video image of a map; a vehicle-position detecting unit 16 for calculating the present position of the vehicle from information received from typically a GPS; an operation unit 17; and a display unit 18 consisting of a CRT or an LCD for example. It should be noted that a cheaper disk drive can also be used in place of the RAM 15.

In this embodiment, stored in the ROM 14 is at least a map drawing program for creating the video image of a map from map data.

The navigation-information transmitting system 2 comprises: an antenna 21; a transmitter/receiver 22 for demodulating a signal received by the antenna 11 in order to obtain information such as an incoming request and for modulating a carrier signal with information to be transmitted and supplying the modulated signal to the antenna 11; a computer 30 for carrying out control to supply a program or information requested by the navigation apparatus 1; and a group of data bases 40 for storing various kinds of information and a variety of programs.

The computer 30 comprises a CPU 31, a ROM 32 for storing an operation program to be executed by the CPU 31 and a RAM 33 for storing received information and information to be transmitted. The group of data bases 40 comprise a map/road-information data base 41, an additional-information data base 42 for storing typically information regarding gas stations and parking areas, a local-information data base 43 for storing information regarding local conditions and on-going construction work, a program data base 44 for storing predetermined programs and a wide-area-information data base 45 for storing information from a wide-area navigation system such as a VICS system.

It should be noted that the computer 30 in the navigation-information transmitting system 2 serves as a supply means for supplying a program stored in the program data base 44 or traffic information, or a program stored in the program data base 44 and traffic information to the navigation apparatus 1 at a request made by the navigation apparatus 1.

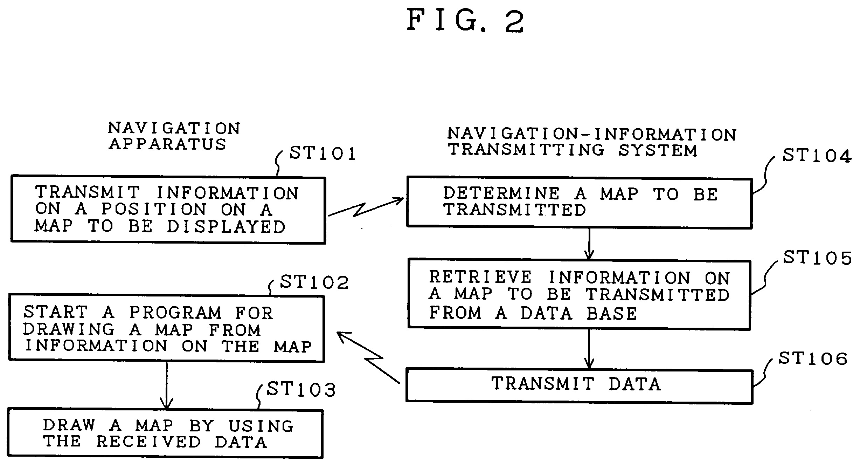

Next, the operation of the navigation system provided by a first embodiment of the present invention is explained by referring to a flowchart shown in Fig. 2.

The vehicle-position detecting unit 16 in the navigation apparatus 1 mounted on a vehicle detects the present position of the vehicle. Let us assume that the vehicle-position detecting unit 16 obtains the present position in terms of the latitude and the longitude thereof detected by the GPS. When the user enters a request to display a map via the operation unit 17, the control unit 13 outputs information of the position to be displayed to the transmitter/receiver 12. The information of the position to be displayed is typically the latitude and longitude of the present position. In addition, the user can also enter information indicating a scale of the map such as 1/25,000 or 1/100,000. At step ST101, the transmitter/receiver 12 transmits these pieces of information to the navigation-information transmitting system 2 through the antenna 11.

Here, the user can input information regarding a position on the map to be displayed in addition to a request for displaying a map. Examples of such information include an address or a telephone number. In the case that the operation unit 17 includes a bar code reader and the user has a table showing relations between bar codes and positions, the user can input a bar code as an information of a position represented by the bar code. When the user has inputted information of a position on a map to be displayed, the control unit 13 outputs the information to the transmitter/receiver 12. As an alternative, the control unit 13 converts the information into a latitude and a longitude or into a number used for displaying a position on the earth before outputting the result of the conversion to the transmitter/receiver 12.

When the transmitter/receiver 22 in the navigation-information transmitting system 2 receives information of a position on a map to be displayed and a scale of the map through the antenna 21, the transmitter/receiver 22 outputs the information to the computer 30 at step ST104. The computer 30 searches the map/road-information data base 41 so as to obtain a map that includes the requested position and has the scale specified in the request. The computer 30 inputs map information for expressing the requested map from the map/road-information data base 41 at step ST 105 and transmits the map information to the navigation apparatus 1 through the transmitter/receiver 22 and the antenna 21 at step ST 106. If the map with the requested scale does not exist in the map/road-information data base 41, the computer 30 obtains a map with a different scale from the map/road-information data base 41 then either enlarges or reduces the map before transmitting the map information to the navigation apparatus 1.

In the navigation apparatus 1, the control unit 13 receives the map information through the antenna 11 and the transmitter/receiver 12 and stores it into the RAM 15. Then, the control unit 13 wakes up a map-drawing program at step ST102. At step ST103, the map-drawing program creates a video image of the map from the map information stored in the RAM 15 and outputs the created video image of the map to the display unit 18. The display unit 18 displays the video image of the map.

As described above, according to this embodiment, since the navigation-information transmitting system 2 supplies map data to the navigation apparatus 1 at a request made by the navigation apparatus 1, the video image of a map can be displayed at a request made by the user without using a medium such as a CD-ROM. In addition, map information stored in the navigation-information transmitting system 2 can be updated relatively with ease. That is to say, most recent map information can always be stored in the navigation-information transmitting system 2. As a result, the navigation apparatus 1 can always display most recent map information.

It should be noted that the navigation apparatus 1 can employ a mobile telephone device or a PHS terminal in place of the transmitter/receiver 12 and the antenna 11.

If the map drawing program can keep up with only a specific format such as that conforming to specifications set typically by a navigation-system research/study group, the control unit 13 in the navigation apparatus 1 can output information specifying a format along with information of a position on a map to be displayed. Receiving the information specifying a format, the computer 30 in the navigation-information transmitting system 2 obtains map information of the specified format from the map/road-information data base 41. If the map information of the specified format does not exist in the map/road-information data base 41, the computer 30 obtains map information of another format and converts the format thereof to the specified format.

### Embodiment 2.

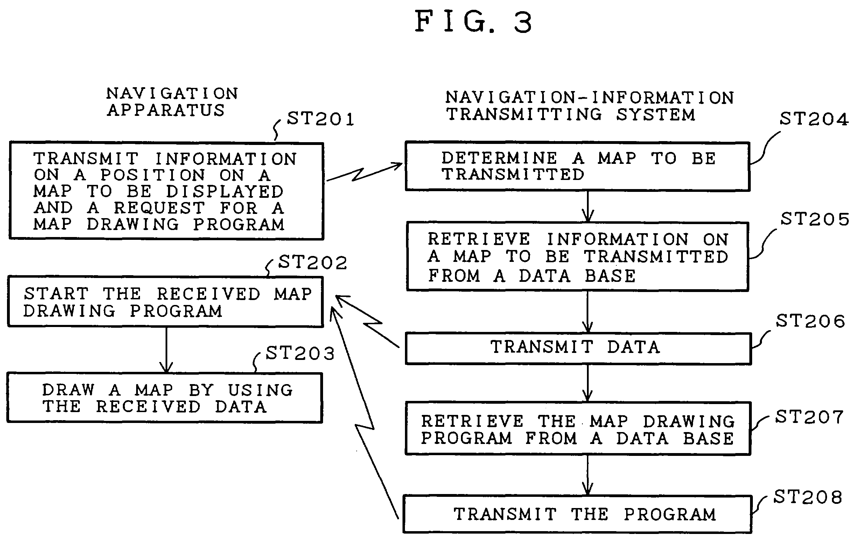

In the first embodiment, the map drawing program is stored in the ROM 14. In the case of a second embodiment, on the other hand, the navigation apparatus 1 has a configuration that does not include a map drawing program. Fig. 3 is a flowchart showing the operation of the navigation system provided by the second embodiment of the present invention.

Next, the operation of the second embodiment is explained by referring to the flowchart shown in Fig. 3.

At step ST201, the control unit 13 in the navigation apparatus 1 outputs a request for a map drawing program along with information of a position on a map to be displayed and a desired scale of the map. Then, at steps ST204, ST205 and ST206, the computer 30 in the navigation-information transmitting system 2 transmits requested map information to the navigation apparatus 1 as is the case with the first embodiment. The computer 30 loads a map drawing program from the program data base 44 at step ST 207 and transmits the map drawing program to the navigation apparatus 1 at step ST 208.

In the navigation apparatus 1, the control unit 13 receives the map information and the map drawing program through the antenna 11 and the transmitter/receiver 12 and stores them into the RAM 15. Then, the control unit 13 wakes up the map-drawing program stored in the RAM 15 at step ST202. Further, the same processing as the first embodiment is carried out at step ST203.

It is easier to update a program stored in navigation-information transmitting system 2 than to update the program stored in the navigation apparatus 1. As a result, a program stored in the navigation-information system 2 is always the most recent one, the functions of which can be upgraded with no problems.

According to the second embodiment, a map drawing program is supplied by the navigation-information system 2 to the navigation apparatus 1. As a result, the navigation apparatus 1 can always draw a video image of a map by using the newest map drawing program.

### Embodiment 3.

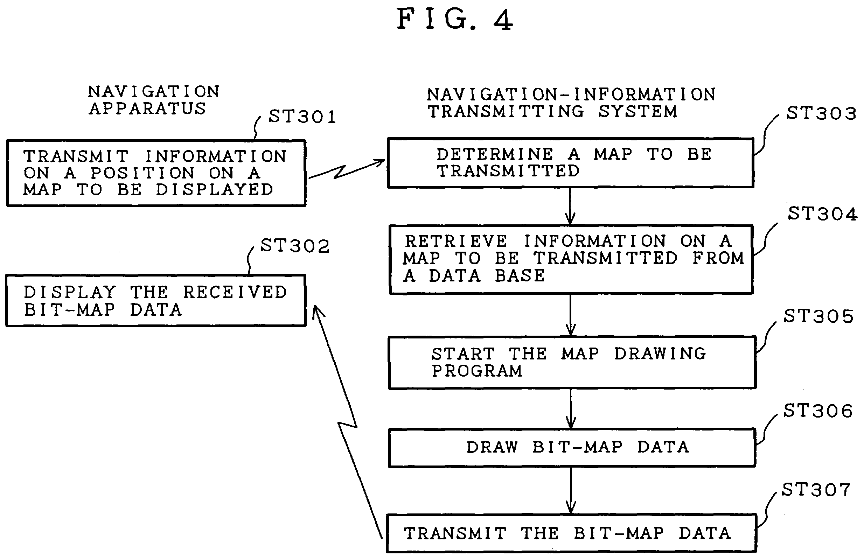

According to the second embodiment, the navigation apparatus 1 sends a request for a map drawing program to the navigation-information transmitting system 2. It should be noted, however, that the navigation system can also have a configuration in which the request for a map drawing program is not transmitted by the navigation apparatus 1 to the navigation-information transmitting system 2. Fig. 4 is a flowchart showing the operation of such a navigation system provided by a third embodiment of the present invention. It should be noted that the configuration of the navigation system of the present embodiment is the same as that shown in Fig. 1. However, the navigation apparatus 1 does not either have a map drawing program.

Next, the operation of the third embodiment is explained by referring to the flowchart shown in Fig. 4.

Much like the first embodiment, when the computer 30 in the navigation-information transmitting system 2 receives information of a position on a map to be displayed and a scale of a map, the computer 30 inputs the requested map information from the map/road-information data base 41 at steps ST301, ST303 and ST304. At step ST305, the computer 30 loads a map drawing program from the program data base 44 and executes the program. At step ST306, the computer 30 stores a video image of the map comprising bit-map data created by the map drawing program from the map information into the RAM 33. At step ST307, the computer 30 transmits the bit-map data to the navigation apparatus 1 through the transmitter/receiver 22 and the antenna 21.

When the control unit 13 in the navigation apparatus 1 receives the bit-map data through the antenna 11 and the transmitter/receiver 12, the control unit 13 outputs the bit-map data to the display unit 18 which then displays a map image by the bit-map data at step ST302.

According to the third embodiment, the navigation apparatus 1 receives bit-map data of a video image of a map from the navigation-information transmitting system 2. As a result, the navigation apparatus 1 can immediately display the video image of a map by using the received data. If a microcomputer is used as the control unit 13, the microcomputer does not have to execute the map drawing program. For this reason, an inexpensive microcomputer with relatively low performance can be employed as the control unit 13.

### Embodiment 4.

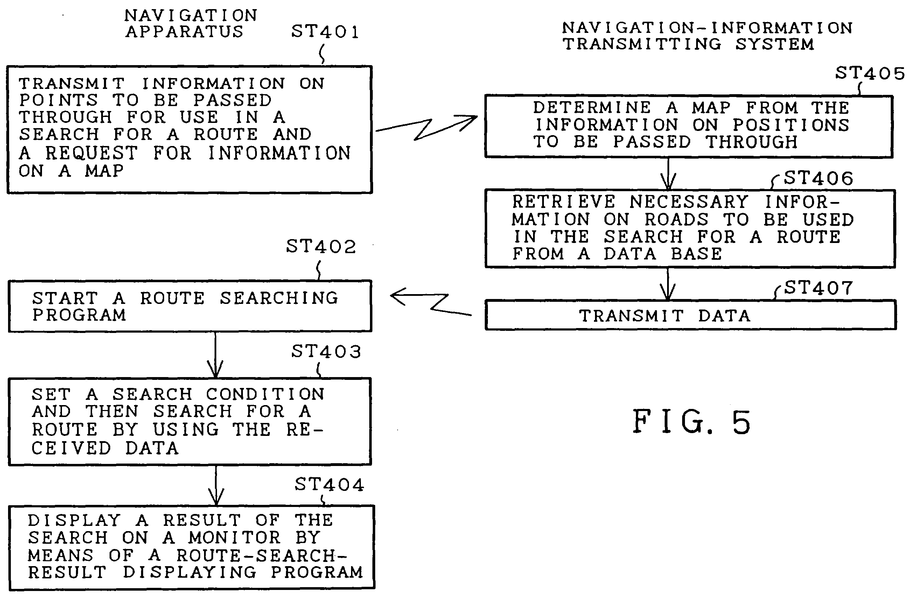

Fig. 5 is a flowchart showing the operation of the navigation system provided by a fourth embodiment of the present invention. With the fourth embodiment, the navigation system can also provide a route searching service to the user. The navigation system of the present embodiment has the same configuration as that shown in Fig. 1. It should be noted, however, that in the case of the fourth embodiment, the ROM 14 in the navigation apparatus 1 stores at least a route searching program and a route-search-result displaying program.

Next, the operation of the fourth embodiment is explained by referring to the flowchart shown in Fig. 4.

When a user inputs a request for searching for an optimum guidance route with information of points to be passed through including a starting point and a destination point by the operation unit 17 in the navigation apparatus 1, the control unit 13 transmits the request for sending information of points to be passed through and road information to the navigation-information transmitting system 2 through the transmitter/receiver 12 and the antenna 11 at a step ST401. The user can input information of points to be passed through by pointing to the points on a map displayed on the display unit 18, by specifying numbers of zones including the points to be passed through on the map or by inputting information selected from a position information list on the map. Then, the control unit 13 transmits latitudes and longitudes of points to be passed through, the numbers on the map or the information on the position information list to the navigation-information transmitting system 2.

At step ST405, when the computer 30 in the navigation-information transmitting system 2 receives the request for sending road information, it determines a map in respect of the points to be passed through based on the attached information of the points to be passed through. At step ST406, the computer 30 extracts road information for the points to be passed through from road information related to map information stored in the map/road-information data base 41 which map information is associated with the map determined at the step ST405. The road information includes information of types of roads terminating and starting at each node specified as a point to be passed through and information of the starting and destination nodes of each road. At step ST407, the computer 30 transmits the road information to the navigation apparatus 1 through the transmitter/receiver 22 and the antenna 21 to the navigation apparatus 1.

At a step ST402, the control unit 13 in the navigation apparatus 1 receives the road information through the antenna 11 and the transmitter/receiver 12 and stores the road information in the RAM 15, and wakes up the route searching program. At step ST403, the route searching program determines a guidance route most optimum for the user among routes connecting the start point and the destination point. In general, a guidance route most optimum for the user is the shortest route. It should be noted that, in the operation to search for an optimum guidance route, an additional route searching condition can be added. When the user inputs a route searching condition such as the use of an express way or a ferry boat, the route searching program determines an optimum guidance route that satisfies the condition. At step ST404, the route-search-result displaying program displays the determined optimum guidance route on the display unit 18 over the video image of the map which has already been displayed thereon.

According to the fourth embodiment, the navigation apparatus 1 mounted in a vehicle can carry out an operation to search for an optimum guidance road even if map information and roads information is not stored therein. In addition, the navigation-information transmitting system 2 can always have the most recent road information. As a result, the navigation apparatus 1 can always perform an operation to search for an optimum guidance road by using the most recent video image of roads.

### Embodiment 5.

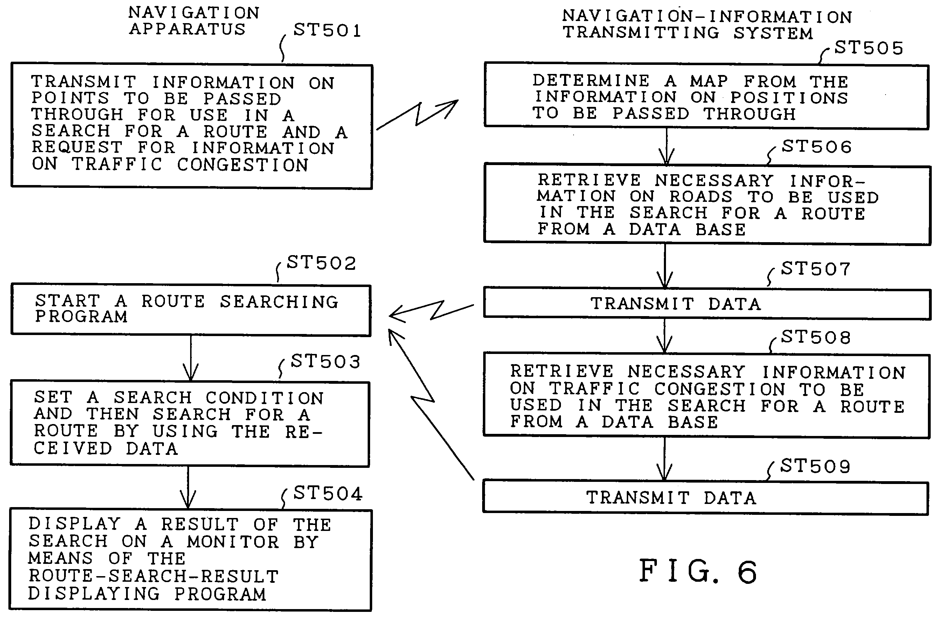

When the navigation apparatus 1 mounted on a vehicle carries out an operation to search for an optimum guidance road, it is possible to take traffic jam information received from the navigation-information transmitting system 2 into consideration. Fig. 6 is a flowchart showing the operation of the navigation system provided by a fifth embodiment of the present invention wherein traffic jam information received from the navigation-information transmitting system 2 is taken into consideration during an operation to search for an optimum guidance road. The configuration of the navigation system is the same as that shown in Fig. 1. In the case of the fifth embodiment, however, at least the route searching program and the route-search-result displaying program are stored in the ROM 14.

Next, the operation of the fifth embodiment is explained.

When the control unit 13 in the navigation apparatus 1 transmits information of points to be passed through and a request for road information to the navigation-information transmitting system 2, the control unit 13 also transmits a request for traffic jam information at a step ST501. Much like the fourth embodiment, the computer 30 in the navigation-information transmitting system 2 retrieves necessary map information from the map/road-information data base 41 and transmits the information to the navigation apparatus 1 at steps ST505, ST506 and ST507. At a step ST508, the navigation-information transmitting system 2 retrieves traffic jam information relevant to the retrieved road information from the wide-area-information data base 45 if such traffic jam information exists in the wide-area-information data base 45. The navigation-information transmitting System 2 transmits the traffic jam information to the navigation apparatus 1 at a step ST509. At steps ST502, ST503 and ST504, the control unit 13 in the navigation apparatus 1 carries out an operation to search for an optimum guidance route by executing the route searching program. In the operation to search for an optimum guidance route, the traffic jam information received from the navigation-transmitting system 2 is taken into consideration. For example, processing with a predetermined weight added for a road with traffic jam is carried out. In this way, the road can be included among roads to be searched for. The route-search-result displaying program displays the determined optimum guidance route on the display unit 18 over a video image of a map which has already been displayed thereon.

According to the fifth embodiment, the navigation apparatus 1 mounted on a vehicle receives road information relevant to points to be passed through as well as road traffic jam information from the navigation-information transmitting system 2. As a result, the user can receive wide-area-information services even if the user did not sign a contract for receiving wide-area-information services provided typically by the VICS system as long as the navigation-information transmitting system 2 has entered into such a contract.

### Embodiment 6.

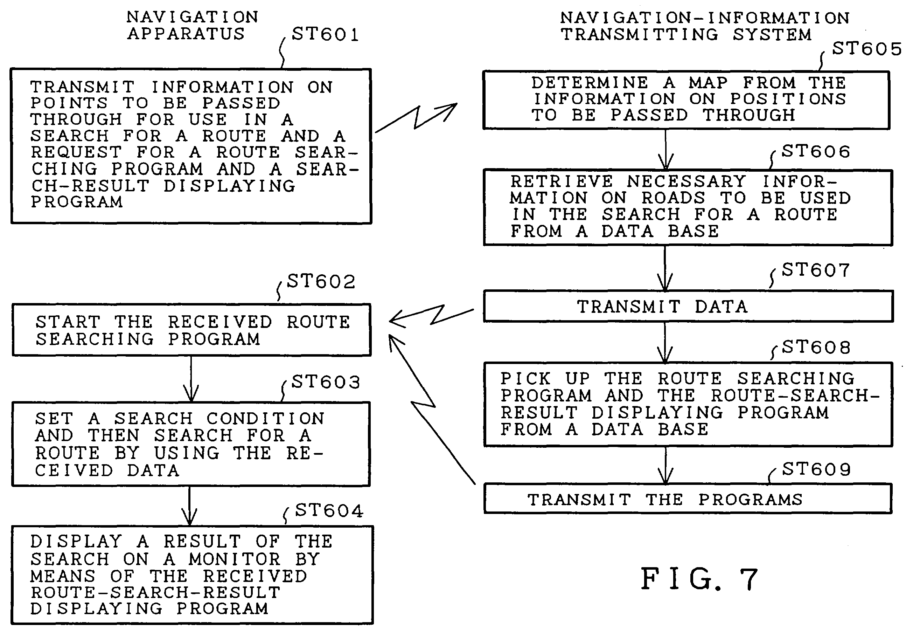

In the case of the fourth and fifth embodiments, the ROM 14 is used for storing the route searching program and the route-search-result displaying program. It should be noted that the navigation apparatus 1 can have a configuration that does not have the route searching program and the route-search-result displaying program. Fig. 7 is a flowchart showing the operation of such a navigation system.

Next, the operation of the sixth embodiment is explained by referring to the flowchart shown in Fig. 7.

When the control unit 13 in the navigation apparatus 1 transmits points to be passed through and a request to transmit map information to the navigation-information transmitting system 2, a request to transmit a route searching program and a route-search-result displaying program is also transmitted to the navigation-information transmitting system 2 as well at a step ST601. Much like the fourth and fifth embodiments, the computer 30 in the navigation-information transmitting system 2 retrieves necessary map information from the map/road-information data base 41 and transmits the information to the navigation apparatus 1 at steps ST605, ST606 and ST607. Further, the computer 30 loads the route searching program and the route-search-result displaying program from the program data base 44 at a step ST608, and transmits the route searching program and the route-search-result displaying program to the navigation apparatus 1 at a step ST609.

Receiving the road information, the route searching program and the route-search-result displaying program from the navigation-information transmitting system 2, the control unit 13 in the navigation apparatus 1 stores the information and the programs into the RAM 15 and then wakes up the route searching program at a step ST602. After the route searching program is executed as is the case with the fourth embodiment at a step ST603, the control unit 13 wakes up the route-search-result displaying program in order to display a result of the operation to search for an optimum guidance route on the display unit 18 over a video image of map which has already displayed thereon at a step ST604.

According to the sixth embodiment, the navigation apparatus 1 receives a route searching program and a route-search-result displaying program from the navigation-information transmitting system 2. As a result, the navigation apparatus 1 can always draw a map by means of the most recent route searching program and the newest route-search-result displaying program whose bugs have been corrected and whose functions have been enriched.

### Embodiment 7.

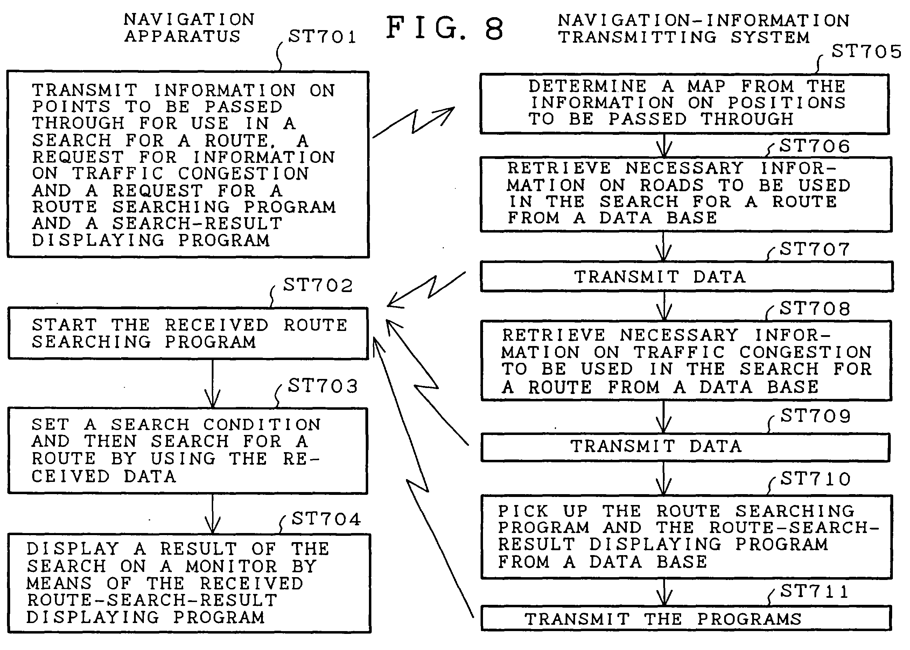

When the on-board navigation apparatus 1 searches for an optimum guidance route by means of a route searching program received from the navigation-information transmitting system 2, traffic jam information received from the navigation-information transmitting system 2 can also be taken into consideration. Fig. 8 is a flowchart showing the operation of such a navigation system provided by a seventh embodiment of the present invention.

Next, the operation of the seventh embodiment is explained.

When the control unit 13 in the navigation apparatus 1 transmits points to be passed through and a request to transmit map information to the navigation-information transmitting system 2, a request to transmit a route searching program and a route-search-result displaying program is also transmitted to the navigation-information transmitting system 2 as well. Further, the control unit 13 transmits a request to provide with traffic jam information at a step ST701. Much like the fourth, fifth and sixth embodiments, the computer 30 in the navigation-information transmitting system 2 retrieves necessary map information from the map/road-information data base 41 and transmits the information to the navigation apparatus 1 at steps ST705, ST706 and ST707. The computer 30 retrieves traffic jam information relevant to the retrieved road information from the wide-area-information data base 45 if such traffic jam information exists in the wide-area-information data base 45. At a step ST709, the computer 30 transmits the traffic jam information to the navigation apparatus 1. The computer 30 loads the route searching program and the route-search-result displaying program from the program data base 44 at a step ST710, and transmits the route searching program and the route-search-result displaying program to the navigation apparatus 1 at a step ST711.

Receiving the road information, the traffic jam information, the route searching program and the route-search-result displaying program, the control unit 13 in the navigation apparatus 1 stores the information and the programs into the RAM 15 and then wakes up the route searching program at a step ST702. Then, much like the fifth embodiment, the route searching program is executed with the road information including traffic jam information taken into consideration at a step ST703. At a step ST704,according to the route-search-result displaying program, the control unit 13 displays a result of the operation to search for an optimum guidance route on the display unit 18 over a video image of map which has already displayed thereon.

According to the seventh embodiment, the navigation apparatus 1 can always draw a map by means of the most recent route searching program and the newest route-search-result displaying program whose bugs have been corrected and whose functions have been enriched. Further, the navigation apparatus 1 can carry out a route search operation considering traffic jam information even if it cannot receive wide-area-information services.

### Embodiment 8.

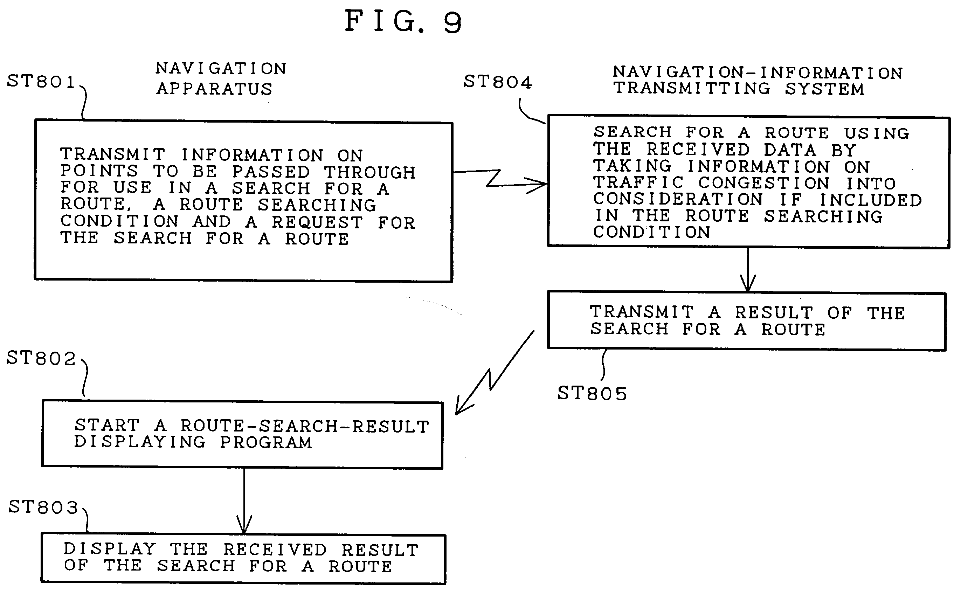

In the case of the sixth and seventh embodiments, the control unit 13 in the navigation apparatus 1 transmits request to provide with a route searching program and a route-search-result displaying program. It should be noted that the navigation system can have a configuration wherein the navigation apparatus 1 does not make a request to transmit the route searching program and the route-search-result displaying program from the navigation-information transmitting system 2. Fig. 9 is a flowchart showing the operation of such a navigation system. The configuration of the navigation system is the same as that shown in Fig. 1. In the case of the eighth embodiment, however, at least a route-search-result displaying program is stored in the ROM 14 and the computer 30 in the navigation-information system 2 serves as a route serving means.

Next, the operation of the eighth embodiment is explained.

When the control unit 13 in the navigation apparatus 1 transmits points to be passed through to the navigation-information transmitting system 2, a request to execute an operation to search for an optimum guidance route is also transmitted to the navigation-information transmitting system 2 at a step ST801. Much like the fourth and fifth embodiments, the computer 30 in the navigation-information transmitting system 2 retrieves necessary map information and road information from the map/road-information data base 41, loads the route searching program from the program data base 44 and executes the route searching program at a step ST804.

When the user enters route searching a condition such as the use of an express way or a ferry boat, such a condition is also transmitted by the navigation apparatus to the navigation-information transmitting system 2. In this case, the route searching program determines the route that meets the conditions. In the execution of the route searching program, traffic jam information can also be taken into consideration. When the user also enters a request to take traffic jam information into consideration through the operation unit 17 or the navigation-information transmitting system 2 is designed to take traffic jam information into consideration, the computer 30 adds a request for consideration of traffic jam information to the route searching condition prior to the execution of the route searching program. In case that consideration request for adding traffic jam information to the route searching condition, the route searching program searches a route by taking traffic jam information into consideration.

The computer 30 transmits a result of the operation to search for an optimum guidance route to the navigation apparatus 1 at a step ST805. The control unit 13 in the navigation apparatus 1 wakes up a route-search-result displaying program at a step ST802, and displays a received route on the display unit 18 over a video image of a map which has already been displayed thereon.

According to the eighth embodiment, the operation to search for an optimum guidance route is executed by the navigation-information transmitting system 2. Since the navigation apparatus 1 does not have to bear a heavy load to carry out the operation to search for the route, an inexpensive microcomputer can be employed as the control unit 13. In general, a large memory is required for the operation to search for an optimum guidance route. In the case of the eighth embodiment, however, the navigation apparatus 1 does not require a memory for the operation to search for an optimum guidance route. Also from this point of view, the navigation apparatus can have an inexpensive configuration.

### Embodiment 9.

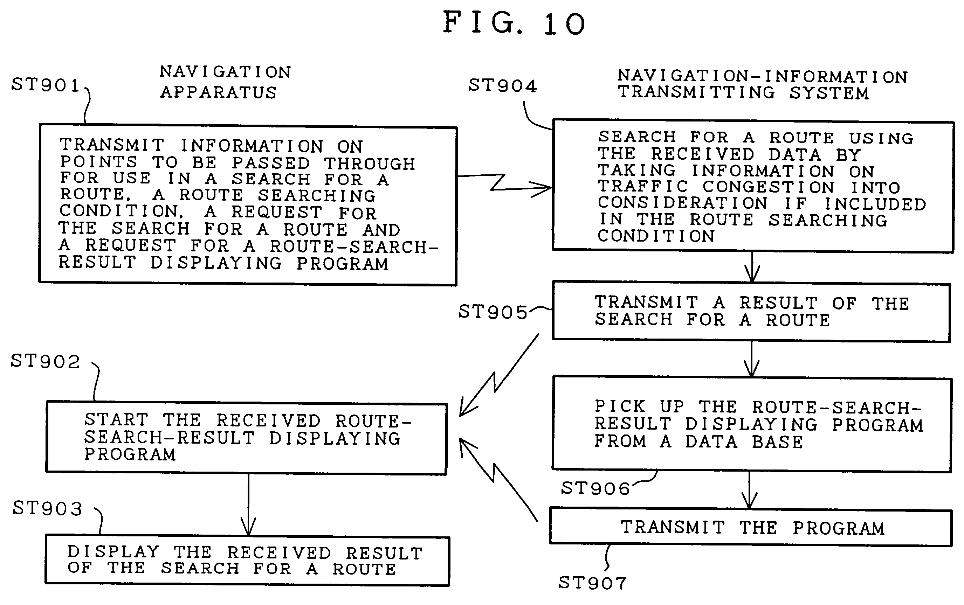

In the case of the eighth embodiment, the ROM 14 in the navigation apparatus 1 is used for storing the route-search-result displaying program. It should be noted, however, that the navigation apparatus 1 can have a configuration wherein the route-search-result displaying program is not stored in the ROM 14. Fig. 10 is a flowchart showing the operation of such a navigation system provided by a ninth embodiment of the present invention.

Next, the operation of the ninth embodiment is explained.

When the control unit 13 in the navigation apparatus 1 transmits information of points to be passed through and a request for an operation to search for an optimum guidance route which requests the execution of an operation to search for an optimum guidance route and includes a route searching condition to the navigation-information transmitting system 2, a request to transmit a route-search-result displaying program is also transmitted as well along with them at a step ST901.

Much like the eighth embodiment, the computer 30 in the navigation-information transmitting system 2 retrieves necessary map information and road information from the map/road-information data base 41, loads the route searching program from the program data base 44 and executes the route searching program at a step ST904. If the route searching condition requires that traffic jam information be taken into consideration, the route searching program searches an optimum guidance route by taking traffic jam information into consideration. The computer 30 transmits a result of the operation to search for a route to the navigation apparatus 1. Further, the computer 30 loads the route-search-result displaying program from the program data base 44 at a step ST906, and transmits the route-search-result displaying program to the navigation apparatus 1 at a step ST907.

Receiving the result of the operation to search for the route and the route-search-result displaying program, the control unit 13 in the navigation apparatus 1 stores the result and the program into the RAM 15 and then wakes up the program at a step ST902. The control unit 13 displays a received optimum guidance route on the display unit 18 over a video image of a map which has already been displayed thereon.

According to the ninth embodiment, the navigation apparatus 1 does not have a route-search-result displaying program, allowing an inexpensive configuration to be built. Further, the navigation apparatus 1 can always draw a video image of a map by means of the newest route-search-result displaying program.

### Embodiment 10.

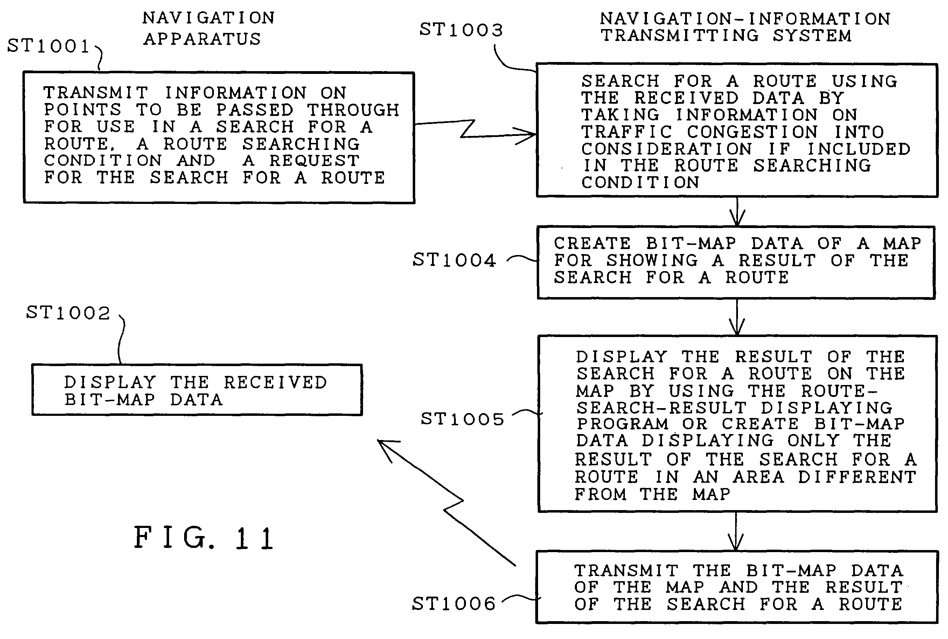

In the case of the fourth to ninth embodiments, the navigation apparatus 1 executes the route-search-result displaying program as described so far. It should be noted, however, that the navigation system can have a configuration in which the navigation apparatus 1 does not execute the route-search-result displaying program. Fig. 11 is a flowchart showing the operation of such a navigation system. The configuration of the navigation system is the same as that shown in Fig. 1. In the case of the tenth embodiment, however, the route searching program and the route-search-result displaying program do not exist in the navigation apparatus 1. In this navigation system, the computer 30 in the navigation-information transmitting system 2 therefore also serves as a conversion means for converting a result of an operation to search for an optimum guidance route into bit-map data.

Next, the operation of the tenth embodiment is explained.

The control unit 13 in the navigation apparatus 1 transmits information of points to be passed through, route searching conditions and a request for an operation to search for an optimum guidance route which requests the execution of an operation to search for an optimum guidance route to the navigation-information transmitting system 2 at a step ST1001. Receiving the information of points to be passed through, at a step ST1003, the computer 30 in the navigation-information transmitting system 2 determines a map related to the points to be passed through from the information, that is, a map that includes the points to be passed through and then reads out map information from the map/road-information data base 41. Then, the computer 30 loads the map drawing program from the program data base 44 and executes the program. The map drawing program produces a video image of a map, that is, bit-map data created from map information and stores the video image into the RAM 33. Then, the computer 30 extracts road information relevant to points to be passed through from road information relevant to map information stored in the map/road-information data base 41 which map information is associated with the determined map. Then, the computer 30 loads the route searching program from the program data base 44 and executes the program at a step ST1003.

Next, the computer 30 converts information of an optimum guidance route produced by the route searching program into bit-map data at a step ST1004. The computer 30 loads the route-search-result displaying program from the program data base 44 and executes the program. The route-search-result displaying program draws the information of the optimum guidance route from the bit-map data on the video image of the map at a step ST1005. The video image of the map with the information of the optimum guidance route drawn thereon is transmitted to the navigation apparatus 1 at a step ST1006. At a step ST1002, the control unit 13 in the navigation apparatus 1 displays the video image of the map with the information of the optimum guidance route drawn thereon on the display unit 18.

As an alternative, at the step ST1005, the route-search-result displaying program draws the information of the optimum guidance route from the bit-map data in an area in the RAM 33 different from the area for the video image of the map. Then, the bit map-data for the information of the optimum guidance route and the bit-map data for the video image of the map are transmitted to the navigation apparatus 1 at a step ST1006. At the step ST1002, the control unit 13 in the navigation apparatus 1 displays the video image of the optimum guidance route and the video image of the map received from the navigation-information transmitting system 2 on the display unit 18 with the video images superposed on each other.

According to the tenth embodiment, the navigation apparatus 1 can immediately display a video image of a map with an optimum guidance route drawn thereon from received information. Thus, a microcomputer serving as the control unit 13 does not have to execute the route-search-result displaying program. As a result, an inexpensive microcomputer with low performance can be employed as the control unit 13.

### Embodiment 11.

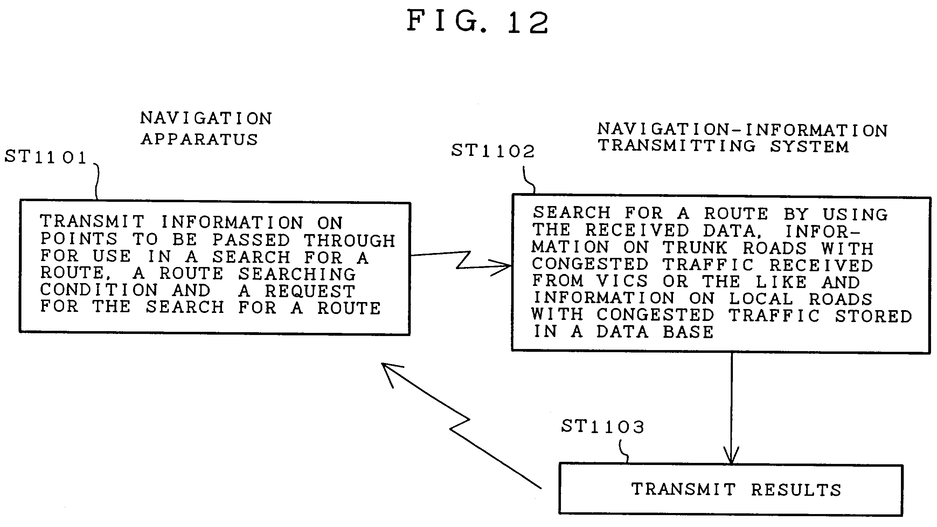

In the case of the eighth to tenth embodiments, if the route searching condition includes the requirement that traffic jam information be taken into consideration, the route searching program carries out the operation to search for an optimum guidance route by taking traffic jam information stored in the wide-area-information data base 45 into consideration. It should be noted that, in the operation to search for an optimum guidance route, traffic jam information stored in the local-information data base 43 can also be taken into consideration. Fig. 12 is a flowchart showing the operation of such a navigation system provided by an eleventh embodiment of the present invention.

Next, the operation of the eleventh embodiment is explained.

The control unit 13 in the navigation apparatus 1 transmits information of points to be passed through, route searching conditions and a request for an operation to search for an optimum guidance route which requests the execution of an operation to search for an optimum guidance route to the navigation-information transmitting system 2 at a step ST1101. Receiving the information of points to be passed through, at a step ST1102, the computer 30 in the navigation-information transmitting system 2 retrieves necessary road information and map information from the map/road-information data base 41. Then, the computer 30 also retrieves traffic jam information relevant to the road information from the local-information data base 43 and/or the wide-area-information data base 45 if such traffic jam information is stored in the local-information data base 43 and/or the wide-area-information data base 45.

The computer 30 then loads the route searching program from the program data base 44 and executes the program. The route searching program determines an optimum guidance route that satisfies the route searching conditions. In the operation to search for the optimum guidance route, the traffic jam information is also taken into consideration. For example, after processing with a predetermined weight added for a road with traffic jam is carried out, the road becomes to be an object to be searched for at a step ST1102.

The computer 30 transmits the result of the operation to search for an optimum guidance route to the navigation apparatus 1 at a step ST1103 as is the case with the eighth to tenth embodiments. It should be noted that, if the eleventh embodiment is applied to the navigation system provided by the tenth embodiment, the result of the operation to search for an optimum guidance route is transmitted to the navigation apparatus 1 as bit-map data. Much like the eight to tenth embodiments, the navigation apparatus 1 displays the result of the operation to search for an optimum guidance route on the display unit 18. If the eleventh embodiment is applied to the navigation systems provided by the eighth and ninth embodiments, the navigation apparatus 1 expands the result of the operation to search for an optimum guidance route into bit-map data by means of the route-search-result displaying program thereof. If the eleventh embodiment is applied to the navigation system provided by the tenth embodiment, on the other hand, the navigation apparatus 1 displays the result of the operation to search for an optimum guidance route as it is without converting it into bit-map data.

According to the eleventh embodiment, if traffic jam information exists in the local-information data base 43, the local traffic jam information can be taken into consideration in addition to traffic jam information regarding trunk roads obtained from services rendered by the VICS system for example. As a result, the operation to search for an optimum guidance route can be carried out with a high degree of accuracy.

### Embodiment 12.

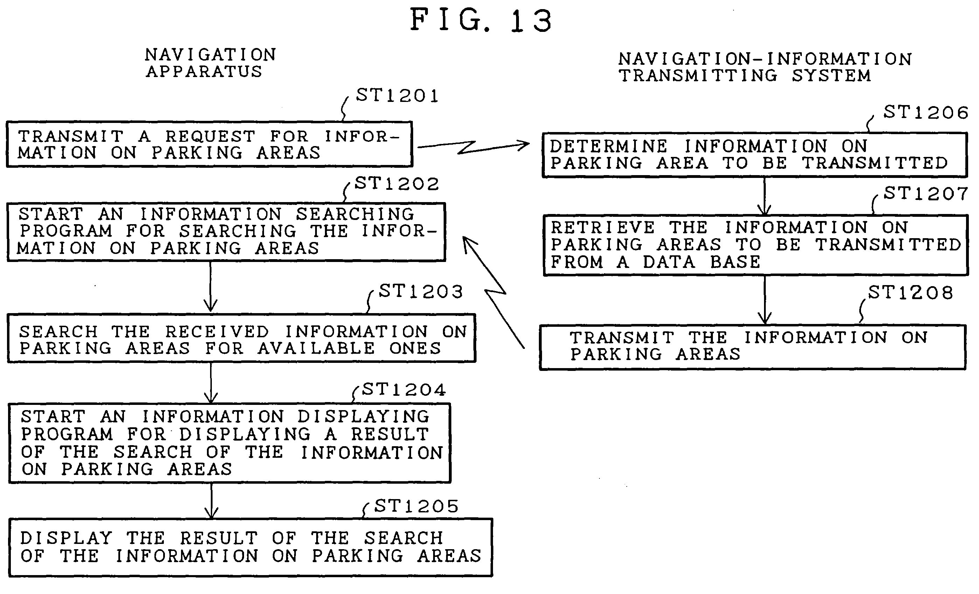

Fig. 13 is a flowchart showing the operation of the navigation system provided by a twelfth embodiment of the present invention. It is assumed that the additional-information data base 42 in the navigation-information transmitting system 2 contain information of parking areas collected by the operator of the system. The information of parking areas includes the locations of the parking areas, the availability status of each of the parking areas and parking fees. It should be noted that the configuration of the navigation system is the same as that shown in Fig. 1. In the case of the twelfth embodiment, however, at least an information searching program and an information displaying program are stored in the ROM 14 of the navigation apparatus 1.

Next, the operation of the twelfth embodiment is explained.

When the user enters a request for information of parking areas via the operation unit 17 in the navigation apparatus 1, the control unit 13 in the navigation apparatus 1 transmits the request for information of parking areas to the navigation-information transmitting system 2 through the transmitter/receiver 12 and the antenna 11 at a step ST1201. Receiving the request for information of parking areas, the computer 30 in the navigation-information transmitting system 2 determines information of parking areas to be transmitted to the navigation apparatus 1 at a step ST1206. For example, the navigation-information transmitting system 2 determines information of parking areas to be transmitted to the navigation apparatus 1 by carrying out processing to exclude full parking areas. The computer 30 retrieves the information determined as the information of parking areas to be transmitted to the navigation apparatus 1 from the additional-information data base 42 at a step ST1207, and transmits the information of parking areas to the navigation apparatus 1 at a step ST1208.

The control unit 13 in the navigation apparatus 1 stores the received information of parking areas into the RAM 15, and wakes up the information searching program. The information searching program selects parking areas based on the information of parking areas in accordance with the request made by the user at a step ST1203. The request made by the user includes requirements such as, for example, a parking fee of equal to or less than 500 yen/hour, the availability of parking lots for ten or more cars and a distance from the parking area to the destination point of equal to or shorter than 500 m. Accordingly, the selected parking areas satisfy these requirements. In addition, the distance from each of the selected parking areas to the destination point may also be output as a result of the operation to search for parking areas under predetermined conditions. The control unit 13 wakes up the information displaying program in order to display the result of the operation to search for parking areas at a step ST1204. At a step ST1205, the information displaying program displays the locations of the selected parking areas on the display unit 18, superposing the locations of the selected parking areas on the video image of a map which has already been displayed thereon. Further, the selected parking areas are displayed in a table format. The table may also display the requirements of the parking areas included in the request made by the user.

It is relatively easy to update the information of parking areas stored in the navigation-information transmitting system 2 in short time intervals. Further, it is possible to store information of local parking areas in the navigation-information transmitting system 2. As a result, according to the twelfth embodiment, the navigation apparatus 1 can deal with the most recent information of parking areas at a detailed level.

### Embodiment 13.

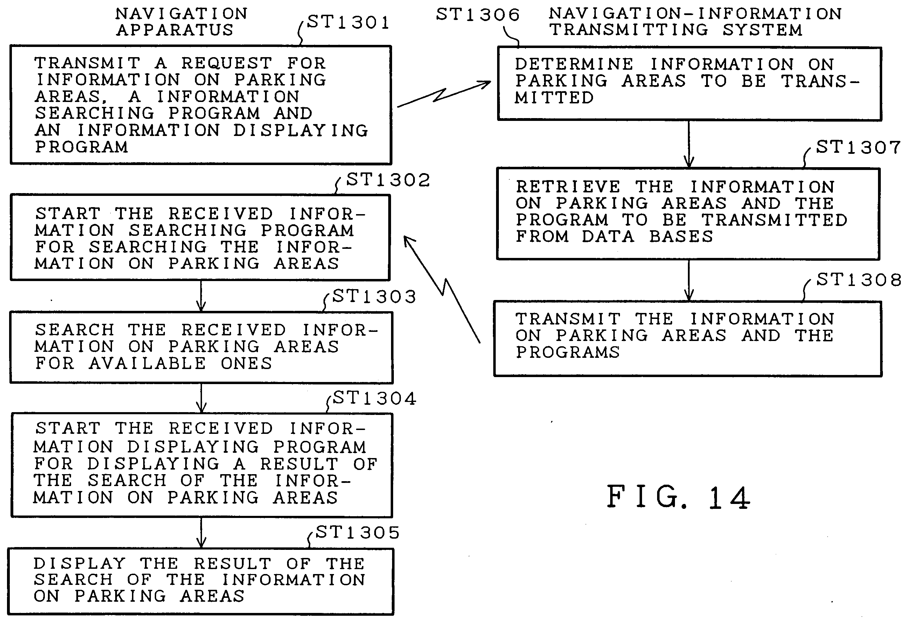

In the case of the twelfth embodiment, the information searching program and the information displaying program can be stored in the ROM 14. It should be noted, however, that the navigation apparatus 1 can have a configuration that does not include the information searching program and the information displaying program. Fig. 14 is a flowchart showing the operation of such a navigation system.

Next, the operation of the thirteenth embodiment is explained.

When the user enters a request for information of parking areas via the operation unit 17 in the navigation apparatus 1, the control unit 13 of the navigation apparatus 1 transmits the request for information of parking areas to the navigation-information transmitting system 2 at a step ST1301 along with a request to transmit the information searching program and the information displaying program. Receiving the request for information of parking areas, the computer 30 in the navigation-information transmitting system 2 determines information of parking areas to be transmitted to the navigation apparatus 1 and retrieves the determined information of parking areas from the additional-information data base 42 at a step ST1306. The computer 30 loads the information searching program and the information displaying program from the program data base 44 in response to the request to transmit the information searching program and the information displaying program at a step ST1307, and transmits the information of parking areas, the information searching program and the information displaying program to the navigation apparatus 1 at a step ST1308.

The control unit 13 in the navigation apparatus 1 stores the information of parking areas, the information searching program and the information displaying program received from the navigation-information transmitting system 2 into the RAM 15. Then, the information searching program stored in the RAM 15 is waked up at a step ST1302. Next, the control unit 13 selects parking areas based on the information of parking areas in accordance with the request made by the user at a step ST1303. Further, the control unit 13 wakes up the information displaying program stored in the RAM 15 in order to display the result of the operation to search for parking areas at a step ST1304. The information displaying program displays the locations of the selected parking areas on the display unit 18, superposing the locations of the selected parking areas on the video image of a map which has already been displayed thereon at a step ST1305. For example, the selected parking areas are displayed in a table format. The table may show requirements of the parking areas included in the request made by the user.

In the case of the thirteenth embodiment, since the navigation apparatus 1 receives the information searching program and the information displaying program from the navigation-information transmitting system 2, the navigation apparatus 1 can always use the most recent information searching and displaying programs.

### Embodiment 14.

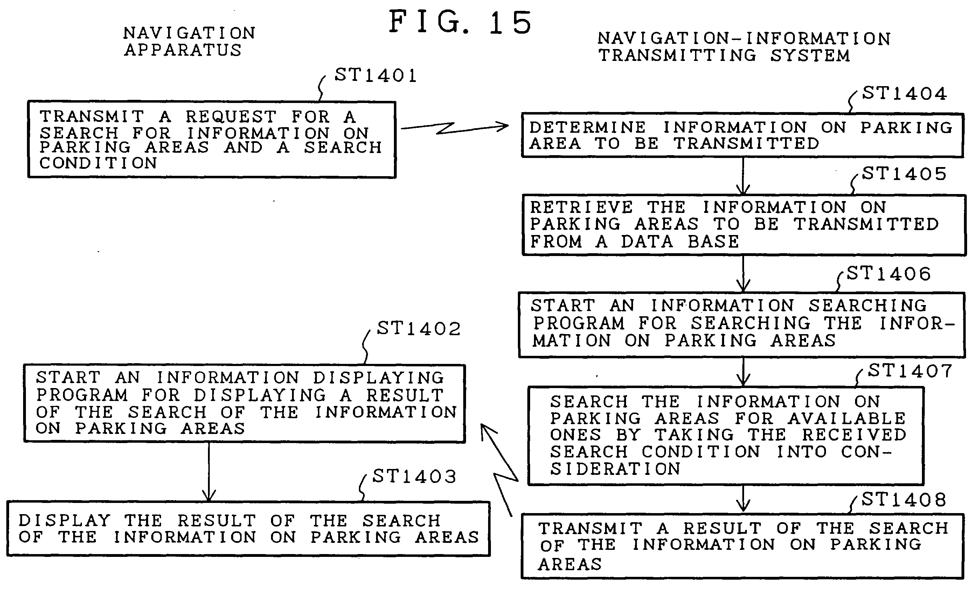

In the case of the twelfth and thirteenth embodiments, the navigation apparatus 1 carries out the operation to search for parking areas as described above. It should be noted, however, that the operation to search for parking areas can be carried out in the navigation-information transmitting system 2. Fig. 15 is a flowchart showing the operation of such a navigation system. It should be noted that the navigation system can have the same configuration as that shown in Fig. 1. In the case of the fourteenth embodiment, however, at least the information displaying program is stored in the ROM 14 of the navigation apparatus 1. In this case, the computer 30 in the navigation-information transmitting system 2 also serves as searching means.

Next, the operation of the fourteenth embodiment is explained.

When the user enters a search condition along with a request for information of available parking areas through the operation unit 17 of the navigation apparatus 1, the control unit 13 in the navigation apparatus 1 transmits the search condition and the request for information of parking areas to the navigation-information transmitting system 2 at a step ST1401. As described previously, an example of the search condition is a parking fee of equal to or less than 500 yen/hour, the availability of parking lots for ten or more cars and a distance from the parking area to the destination point of equal to or shorter than 500 m. Receiving the request for information of parking areas, the computer 30 in the navigation-information transmitting system 2 determines information of parking areas to be searched at a step ST 1404. For example, the navigation-information transmitting system 2 determines the information of parking areas to be searched by carrying out processing to eliminate full parking areas. The information of parking areas to be searched is retrieved from the additional-information data base 42 at a step ST1405.

Subsequently, the computer 30 loads the information searching program from the program data base 44 and wakes up the program. The information searching program selects parking areas under predetermined conditions by using the information of parking areas in accordance with the search conditions at a step ST1407. The result of the operation to search for parking areas is transmitted to the navigation apparatus 1 at a step ST1408. When the control unit 13 in the navigation apparatus 1 receives the results of the operation to search for parking areas, the information displaying program is waked up at a step ST1402. information displaying program displays the locations of the selected parking areas on the display unit 18, superposing the locations of the selected parking areas on the video image of a map which has already been displayed thereon at a step ST1403. For example, the selected parking areas are displayed in a table format. The table may show requirements of the parking areas included in the request made by the user.

According to the fourteenth embodiment, the operation to search for parking areas is carried out by the navigation-information transmitting system 2 as described above. In this way, it is thus not necessary to perform the search processing, a heavy work load, in the navigation apparatus 1. As a result, an inexpensive microcomputer with low performance can be employed as the control unit 13.

### Embodiment 15.

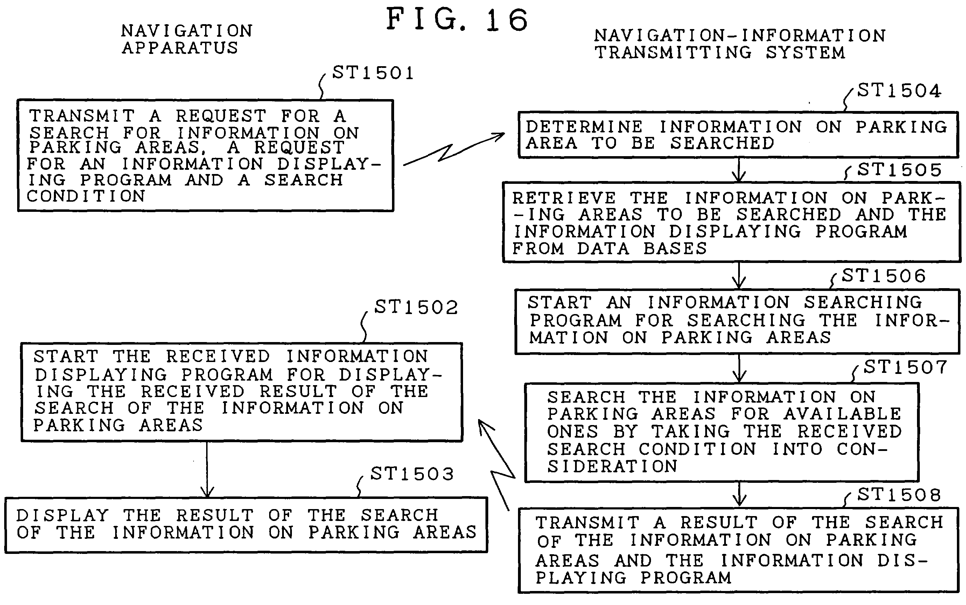

In the case of the fourteenth embodiment, the information displaying program is stored in the ROM 14 of the navigation apparatus 1. It should be noted, however, that the navigation system can have a configuration in which the navigation apparatus 1 does not have an information displaying program. Fig. 16 is a flowchart showing the operation of such a navigation system.

Next, the operation of the fourteenth embodiment is explained.

When the user enters a search condition along with a request for information of parking areas through the operation unit 17 of the navigation apparatus 1, the control unit 13 in the navigation apparatus 1 transmits the search condition and the request for information of parking areas to the navigation-information transmitting system 2 at a step ST1501. Receiving the request for information of parking areas and the search condition, the computer 30 in the navigation-information transmitting system 2 determines information of parking areas to be searched at a step ST1504, and retrieves the information on parking areas to be searched from the additional-information data base 42 at a step ST1505.

Subsequently, the computer 30 loads the information displaying program and the information searching program from the program data base 44 and wakes up the information searching program at a step ST1506. The information searching program selects parking areas under predetermined conditions by using the information of parking areas in accordance with the search condition at a step ST1507. The result of the operation to search for parking areas and the information displaying program are transmitted to the navigation apparatus 1 at a step ST1508. When the control unit 13 in the navigation apparatus 1 receives the result of the operation to search for parking areas and the information displaying program, it stores the results of the search operation and the information program in the RAM 15 and then wakes up the information displaying program at a step ST1502. The information displaying program displays the locations of the selected parking areas on the display unit 18, superposing the locations of the selected parking areas on the video image of a map which has already been displayed thereon at a step ST1503. For example, the selected parking areas are displayed in a table format. The table may show requirements of the parking areas included in the request made by the user.

According to the fifteenth embodiment, the navigation apparatus 1 is relieved from the search-processing work load and, at the same time, can always use the most recent displaying program.

### Embodiment 16.

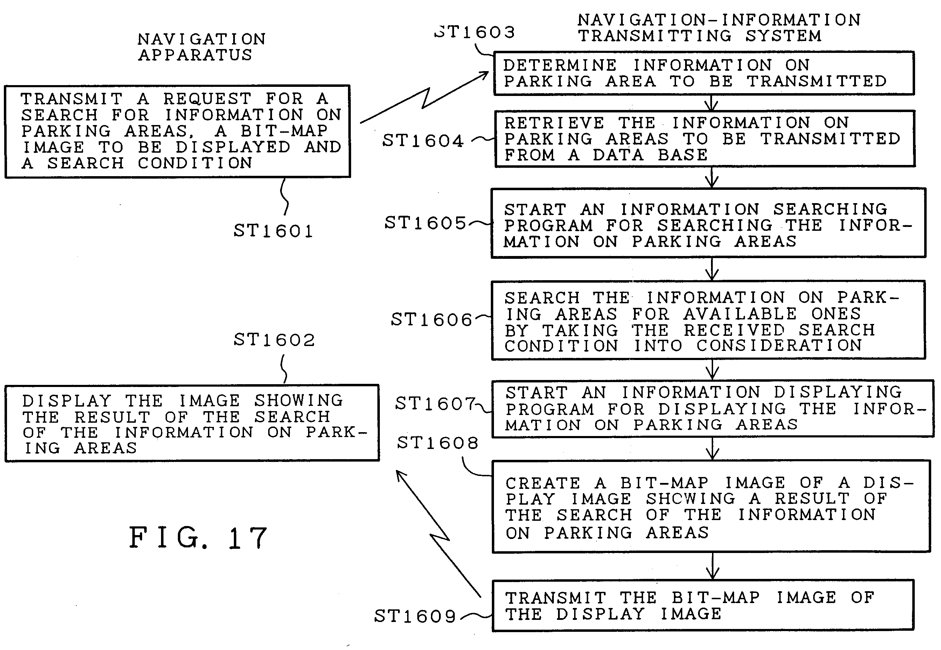

In the case of the twelfth to fifteenth embodiments, a result of an operation to search for parking areas is transmitted from the navigation-information transmitting system 2 to the navigation apparatus 1. It should be noted that the navigation system can have a configuration in which a result of an operation to search for parking areas is transmitted from the navigation-information transmitting system 2 to the navigation apparatus 1 as a bit-map image. Fig. 17 is a flowchart showing the operation of such a navigation system. The configuration of the navigation system is the same as that shown in Fig. 1. In the case of the sixteenth embodiment, however, the computer 30 in the navigation-information transmitting system also serves as conversion means for converting a result of an operation to search for parking areas into bit-map data.

When the user enters a search condition along with a request for information of parking areas through the operation unit 17 of the navigation apparatus 1, the control unit 13 in the navigation apparatus 1 transmits a request for a video image in addition to the search condition and the request for information of parking areas to the navigation-information transmitting system 2 at a step ST1601. Receiving the request for the request for information of parking areas, the computer 30 in the navigation-information transmitting system 2 carries out an operation to search for parking areas and produces a result of the operation at steps ST1603 to ST1606 is the case with the fifteenth embodiment.

Then, the computer 30 determines a map that includes the selected parking areas and reads out the map information from the map/road-information data base 41. Subsequently, the computer 30 loads the map drawing program from the program data base 44 and executes the program. A video image of a map, that is, bit-map data produced by the map drawing program from the map information is then stored in the RAM 33. Furthermore, the computer 30 loads the information displaying program for displaying the result of the operation to search for parking areas from the program data base 44 and executes the program at a step ST1607. The information displaying program displays the locations of selected parking areas in the RAM 33, superposing the locations of the selected parking areas on the video image of a map which has already been stored therein at a step ST1608. For example, the selected parking areas are displayed in a table format. The table may shows requirements of the parking areas included in the request made by the user. The computer 30 transmits the video image of the map, bit-map data with the selected parking areas displayed, to the navigation apparatus 1 at a step ST1609. At a step ST1602, the control unit 13 in the navigation apparatus 1 displays the received video image of map on the display unit 18.

As an alternative, at the step ST1608, the information displaying program draws the information of the locations of the selected parking areas different from the area for the video image of the map in the RAM 33 at a step ST1608. Then, the computer 30 transmits the bit-map data of only the information of the locations of the selected parking areas and the bit-map data for the video image of the map to the navigation apparatus 1 at a step ST1609. At the step ST1602, the control unit 13 in the navigation apparatus 1 displays the video image of the locations of the selected parking areas and the video image of the map received from the navigation-information transmitting system 2 on the display unit 18 with the video images superposed on each other.

According to the sixteenth embodiment, the navigation apparatus 1 can immediately display the video image of a map with the locations of selected parking areas drawn thereon based on received information. If a microprocessor is employed to serve as the control unit 13, the microprocessor needs not to execute a route-search-result displaying program. As a result, an inexpensive microcomputer with low performance can be utilized the control unit 13.

As described above, information of parking areas is used as additional information. It should be noted, however, that the additional information is not limited to such information. For example, the additional information can be information of gas stations.

In addition, the twelfth to sixteenth embodiments can be applied to the navigation systems provided by the first to eleventh embodiments.

### Embodiment 17.

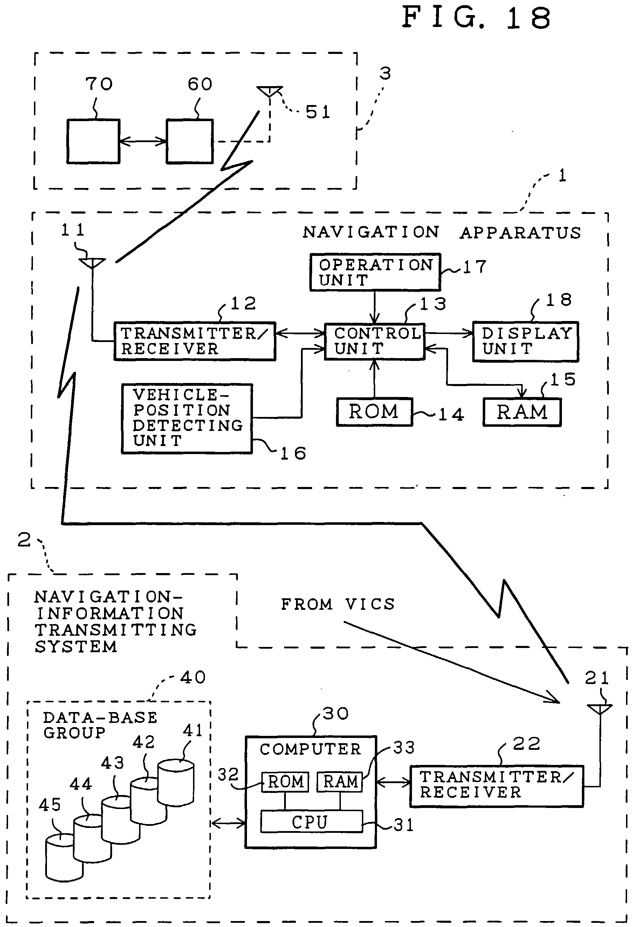

Fig. 18 is a system configuration diagram showing the configuration of a navigation system provided by a seventeenth embodiment of the present invention. Reference numeral 3 shown in the figure is a parking-area navigation-information transmitting system installed at the office of a parking area. The other elements composing the configuration are the same as those shown in Fig. 1. Even though the figure shows only an antenna 51, a computer 60 and a data base 70 in the parking-area navigation-information transmitting system 3, in actuality, the configuration of the parking-area navigation-information transmitting system 3 is the same as that of the navigation-information transmitting system 2.

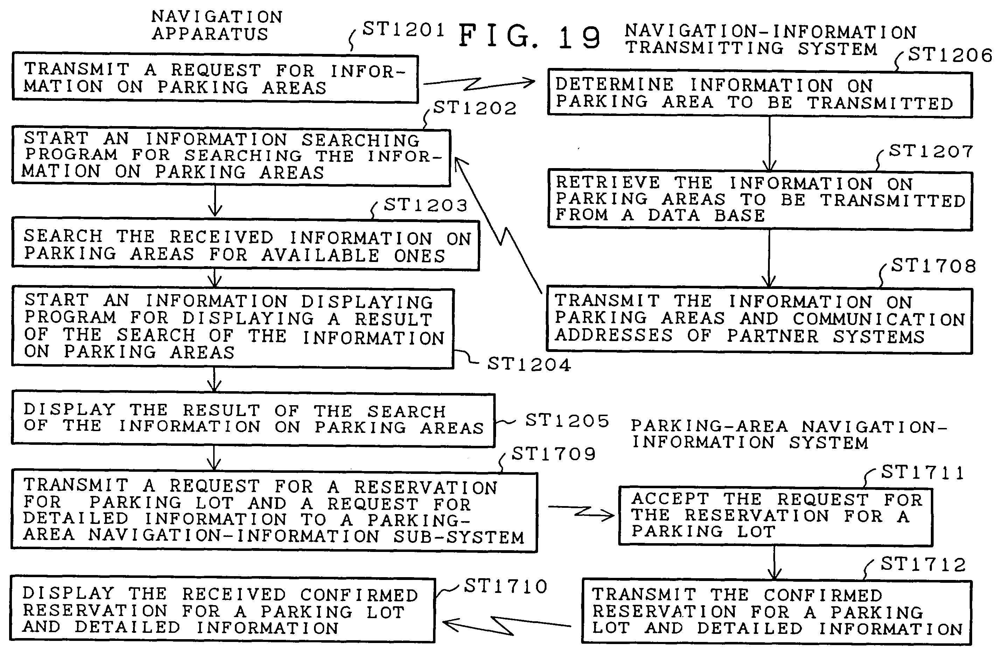

Next, the operation of the seventeenth embodiment is explained by referring to the flowchart shown in Fig. 19.

When the user enters a request for information of parking areas via the operation unit 17 in the navigation apparatus 1, the control unit 13 of the navigation apparatus 1 transmits the request for information of parking areas to the navigation-information transmitting system 2 at a step ST1201. Receiving the request for information of parking areas, the computer 30 in the navigation-information transmitting system 2 determines information of parking areas to be transmitted to the navigation apparatus 1 at a step ST1206 as is the case with the twelfth embodiment. The computer 30 retrieves the information determined as the information of parking areas to be transmitted from the additional-information data base 42 at a step ST 1207.

The computer 30 transmits the retrieved information of parking areas to the navigation apparatus 1 along with a communication address of a partner system associated with each parking area. By a partner system associated with a parking area, a parking-area navigation-information transmitting system 3 installed at the office of the parking area is meant. In the figure, only one parking-area navigation-information transmitting system 3 is shown. In actuality, however, there can be also many parking-area navigation-information transmitting systems 3 in respect to parking areas respectively. Accordingly, one navigation-information transmitting system 2 is provided in a region in which several parking-area navigation-information transmitting systems 3 exist. By the communication address of a partner system, for example, the telephone number of the parking area or an address of the parking area in a communication network, services of which are subscribed by the parking area, is meant. Communication addresses are stored in the additional-information data base 42 along with information of parking areas.

Receiving the information of parking areas and communication addresses of partner systems, the control unit 13 in the navigation apparatus 1 stores the information and the communication addresses in the RAM 15. Much like the twelfth embodiment, the control unit 13 then wakes up the information searching program at a step ST1202. The information searching program selects parking areas based on the information of parking areas in accordance with the request made by the user. Next, the control unit 13 wakes up the information displaying program in order to display the result of the operation to search for parking areas at a step ST1204. The information displaying program displays the locations of the selected parking areas on the display unit 18 at a step ST1205. For example, the locations of the selected parking areas are superposed on the video image of a map which has already been displayed thereon. The selected parking areas may be displayed in a table format. The table may show the requirements of the parking areas included in the request made by the user.

The user then searches the table for a parking area that satisfies the displayed requirements. In this way, the user can select a parking area that is optimum for the user. As the user makes a reservation for the parking area by pointing to the desired parking area, the control unit 13 in the navigation apparatus 1 retrieves the communication address of a parking-area navigation-information transmitting system 3 associated with the parking area pointed to by the user from the RAM 15. Then, a call to the communication address is made through the transmitter/receiver 12 and the antenna 11 to request the reservation for the parking area. A request for a parking-lot reservation is transmitted to the parking-area navigation-information transmitting system 3 along with a request to transmit detailed information of the parking area at a step ST1709.

At a step ST1711, the computer 60 in the parking-area navigation-information transmitting system 3 carries out processing to reserve a parking lot in accordance with the request for a parking-lot reservation. Further, the computer 60 retrieves detailed information from the data base 70. The detailed information includes a detailed map of the vicinity of the parking area, the map of the parking area itself and information indicating the reserved parking lot. The computer 60 transmits the acceptance of the request for a parking-lot reservation and the detailed information to the navigation apparatus 1 at a step ST1712. Then, at a step ST1710, the navigation apparatus 1 displays the detailed information on the display unit 18.

According to the seventeenth embodiment, by carrying out communication, the user can obtain not only map information and road information, but also various kinds of service information.

As described above, the seventeenth embodiment is built by adding a parking-area navigation-information transmitting system 3 to the navigation system provided by the twelfth embodiment. It should be noted, however, that a parking-area navigation-information transmitting system 3 can also be added to any one of the thirteenth to sixteenth embodiments.

In addition, even though a parking-area navigation-information transmitting system 3 is taken as an example in the seventeenth embodiment, the function of a parking-area navigation-information transmitting system 3 can also be applied to a gas station as well.

A navigation-information transmitting system has a map/road-information data base, an additional-information data base, a local-information data base, a program data base and a wide-area-information data base. The navigation-information transmitting system supplies information and programs stored in the data bases to a navigation apparatus.

## Claims

1. A navigation system comprising:
a navigation apparatus (1) having a transmitter/receiver (12) for transmitting information accompanying requests and receiving information, an operation unit (17) for inputting a request made by the user, a display unit (18) for displaying a video image of a map and a control unit (13) for controlling transmission and reception and controlling a display operation; and
a navigation-information transmitting system (2) for providing various services according to requests from said navigation apparatus (1),
wherein said navigation-information transmitting system (2) comprises:
a program data base (44) for storing programs;
a map/road-information data base (41) for storing information including map information and road information; and
supply means (30) for supplying one of a program stored in said program data base (44) and traffic information or supplying a program stored in said program data base (44) and traffic information to said navigation apparatus (1) in response to a request from said navigation apparatus (1).

2. A navigation system according to claim 1,
wherein said supply means (30) supplies map information stored in said map/road-information data base (41) and a map drawing program stored in said program data base (44) to said navigation apparatus (1).

3. A navigation system according to claim 1,
wherein said supply means (30) retrieves road information of points to be passed through from said map/road-information data base (41) for use in an operation to search for an optimum guidance route and supplies said retrieved road information to said navigation apparatus (1).

4. A navigation system according to claim 3,
wherein said navigation-information transmitting system (2) includes a wide-area-information data base (45) for storing wide-area traffic information and wherein said supply means (30) supplies traffic jam information stored in said wide-area-information data base (45) to said navigation apparatus (1).

5. A navigation system according to claim 3 or 4,
wherein said supply means (30) supplies a route searching program and a route-search-result displaying program stored in said program data base (44) to said navigation apparatus (1).

6. A navigation system according to claim 1,
wherein said navigation-information transmitting system (2) includes route searching means (30) for carrying out an operation to search for an optimum guidance route in response to a request from said navigation apparatus (1) and wherein said supply means (30) supplies a result of said operation to search for an optimum guidance route to said navigation apparatus (1).

7. A navigation system according to claim 6,
wherein said supply means (30) supplies a route-search-result displaying program stored in said program data base (44) to said navigation apparatus (1).

8. A navigation system according to claim 6,
wherein said navigation-information transmitting system (2) has conversion means (30) for converting a result of said operation to search for an optimum guidance route into bit-map data.

9. A navigation system according to any one of claims 6 to 8,
wherein said navigation-information transmitting system (2) has a local-information data base (43) for storing local traffic jam information and wherein said route searching means (30) carries out an operation to search for an optimum guidance route by also taking said local traffic jam information into consideration.

10. A navigation system according to claim 1,
wherein said navigation-information transmitting system (2) has an additional-information data base (42) for storing additional information other than traffic information and wherein said supply means (30) supplies additional information stored in said additional-information data base (42) to said navigation apparatus (1).

11. A navigation system according to claim 10,
wherein said supply means (30) retrieves an information searching program for carrying out an operation to search said additional information for information desired by the user and an information displaying program for displaying a result of said operation from said program data base (44) and transmits said retrieved information searching program and information displaying program to said navigation apparatus (1).

12. A navigation system according to claim 10,
wherein said navigation-information transmitting system (2) has search means (30) for carrying out an operation to search said additional information stored in said additional-information data base (42) for information desired by the user and wherein said supply means (30) supplies information desired by the user to said navigation apparatus (1).

13. A navigation system according to claim 12,
wherein said supply means (30) supplies said information displaying program stored in said program data base (44) to said navigation apparatus (1).

14. A navigation system according to claim 12,
wherein said navigation-information transmitting system (2) has conversion means (30) for converting a search result by said search means (30) into bit-map data.

15. A navigation system according to any one of claims 10 to 14,
wherein said additional-information data base (42) is used for further storing communication addresses of facilities shown in a map in addition to said additional information and wherein said supply means (30) supplies said communication addresses to said navigation apparatus (1) along with said additional information.
